# EUROPEAN PATENT SPECIFICATION

(11) **EP 1 250 973 B1**
(45) Date of publication and mention of the grant of the patent: **18.01.2006**
(21) Application number: 02008818.3
(22) Date of filing: 19.04.2002
(51) Int. Cl.: B23D 45/10, B27B 7/04, B23D 45/04, B23D 59/00

(54) **Apparatus for double sided cutting of items**
Vorrichtung zum zweiseitigen Schneiden von Gegenständen
Dispositif pour couper des objets à deux cotés

(30) Priority: 21.04.2001 DK 200100637
(43) Date of publication of application: 23.10.2002
(73) Proprietor: Brodbaek & Co. A/S, DK-7173 Vonge (DK)
(72) Inventor: Brodbaek, Kaj, 7173 Vonge (DK)
(74) Representative: Nielsen, Leif

(56) References cited:
- AT-B- 364 514
- DE-A- 3 714 769
- US-A- 4 922 780
- US-A- 6 128 989

## Description

The present invention concerns an apparatus for double-sided machining of items, according to the preamble of claim 1, as known from DE3714769.

Items, particularly tree trunks, are typically cut up by being passed through a band saw where a continuous saw blade is driven through the item. This kind of machines have a number of drawbacks. The continuous blade is relatively unstable in its groove with the consequence that the saw groove may vary in orientation and thickness. Besides, a very pciwcrful machine is required in order to keep the saw blade sufficiently tight and in fixed relation to the items to be worked on. Furthermore, mere are limits to how fast the items can be moved past the blade since the blade design set the limits for how much material that may be removed and how rapidly. These kind of machines are furthermore usually very large and may only be used for cutting up wood items.

Therefore, there has been a development where these drawbacks have been attempted removed. It is known, see e.g. DE 4038129 to arrange two saw blades for double-sided machining of an item. The blades are arranged over each other where they may be adjusted linearly in upwards and downwards direction and in this way vary the groove depth. Two conveyor belts are arranged in co-ordination for advancing and further conveying, respectively, of the item. When an item is machined, the grooves of the two saw blades are overlapping each other so that a through-going groove is made.

Besides that the prior art apparatus requires individual adjustment of the two saw blades for adaptation to different sizes of items, the apparatus is of complicated construction and very heavy. Typically, such an apparatus weighs about 10 tons.

Furthermore, by the prior art apparatuses having tools in the shape of rotating saw blades used for cutting up tree trunks, there is a difficulty with achieving stability in the construction simultaneously with small tolerances reducing wear.

Thus it is significant that an apparatus according to the invention has a certain weight and thereby a stability when used for cutting up a tree trunk which may be advanced with a relatively high speed.

Furthermore, with regard to adjusting saw blades relatively to the suspension of the apparatus etc., there are used plural guides upon which the drive shafts of the saw blades are mounted. By using plural guides, there is risk of play in the tool due to tolerances in different guides used for supporting and displacing the tools.

Thus it is an object of the present invention to provide an apparatus where the above drawbacks are relieved, and which by simple means facilitate moving the tools in a construction which is cheap and which may be produced with better tolerances.

The present invention thus provides an apparatus for double-sided machining of an item with a technically simple construction where it is ensured that the tools become adjusted in relation to the item without relative mutual adjustment, arranged in a simple apparatus construction which is easy to operate.

According to the present invention this is achieved with an apparatus according to claim 1.

Hereby is achieved a simple construction which is easy to operate as the tools are not to have individual control systems but are mounted on a common frame, whereby adjusting the entire frame causes the correct adjustment of both tools relative to the item. Thus it will also be possible to achieve better tolerances, as no allowance is to be made for individual tolerances on guides for translational displacements of the apparatus.

The frame itself is controlled by a first control means, e.g. a hydraulic cylinder secured on the frame, preferably spaced apart from the axis of rotation. By activating the hydraulic cylinder, the frame and thereby the tools are pivoted up or down in relation to the item to be machined.

Even if the apparatus according to the invention is primarily intended for use in machining items with tools at each side edge on each side of a vertical centre plane along the item, it will also be possible to use the apparatus with only one tool on each drive shaft, so that there is only performed machining from one side edge of the item. This may e.g. be the case by cutting up tree trunks where boards are only cut up from one side edge. A first run of cutting up tree trunks may thus occur by machining on both side edges. Then a second or subsequent run, where a rectangular core may be established, take place by machining on one side edge, where only two saw blades disposed in the same plane, are used for cutting up the rectangular core from the underside and the upper side, respectively, of the core.

The apparatus may thus comprise two drive shafts supporting the rotating tools which are intended for machining the item from one and the other side. These drive shafts are at the same time guide shafts for establishing a linear displacement relative to the item of the latter or of the tools mounted laterally thereon and thus also relative to the plane of the tools. As separate guides are not used, it is possible to reduce the tolerances with which the apparatus may operate. There will only be tolerances based on a linear displacement of the drive/guide shaft and not tolerances from two or more guides used for supporting each drive shaft.

In a preferred embodiment, the tools are arranged so that they in their operation overlap each other, and that the overlap by pivoting the frame is arranged largely at the centre of the item to be machined.

In a further embodiment there are provided sensors, e.g. optical or mechanical, detecting the dimensions of the item. The informations are relayed to a control unit activating one or more control means and thereby setting the tools in the optimally correct position with regard to height and side direction for machining the item. The sensors are arranged before the apparatus as seen in the direction of movement of the item and thereby the feeding direction relative to the apparatus.

As alternative to controlling according to sensors continually monitoring the item in connection with feeding, the apparatus may be used for machining pro-sorted items, e.g. wooden beams. Hereby, there is no need for setting the tools of the apparatus during machining of a batch.

The tools are preferably arranged so that they rotate in the same plane but with opposite directions of rotation. Thereby is achieved that one tool due to the machining of the item pushes the item in one direction, and that the other tool correspondingly pushes the item in opposite direction. Thereby is achieved an almost neutral action on the item, making control of the item easier. By displacing the overlap up or down, due to the opposite directions of rotation of the tools the item may be urged to be pushed or pulled, respectively, through the apparatus. The displacement of the overlap is controlled by the control means. In a normal situation, the overlap will be at the centre of the item in order to achieve largely equally great loads on the two tools.

The mentioned overlap furthermore has a stabilising effect on the tools as the tool running rearmost in the direction of operation, will be guided by the groove of the foremost tool. Hereby is achieved a cleaner groove, e.g. in the form of a saw groove, in the finished item.

In a further preferred embodiment, there are mounted plural tools on each drive shaft. Hereby is achieved the possibility of machining the item from two opposite side edges. In an apparatus according to the invention there will typically be mounted plural tools on each drive shaft. In this embodiment, the drive shaft will typically be shaped as a hollow shaft where the desired number of drive shafts are arranged coaxially, each being separately coupled to a tool. Hereby is achieved that an item may be machined by plural tools by one run in the apparatus. This is particularly suitable in cutting up items into boards/planks, or by milling items into a certain profile.

In a well-known way, each of the coaxially arranged shafts are coupled to the same motor. As previously mentioned, mounting of one or more tools on each shaft will reduce the tolerances and thereby the precision of the movement of the tools. This is advantageous as lesser tolerance and thereby lesser play in an apparatus will cause less wear on the tools.

By e.g. cutting up a tree trunk, different kinds of tools, such as saw blades and cutter blades, may be combined so that the cutter blades are set to cut (called blocking) what will be the edge of boards/planks, while the saw blades are cutting up the trunk into boards/planks.

The control means may e.g. include a hydraulic cylinder. It may both be a single-acting as well as a double-acting cylinder, e.g. a hydraulic cylinder.

In the embodiment with a single-acting cylinder, it will typically be arranged to press the frame upwards as the dead weight of the apparatus will press the cylinder together again. By using a double-acting cylinder, the reaction time for the adjustment of the tools in relation to the dimension of the item is reduced. The cylinder, being either single- or double-acting, may advantageously co-operate with a sensor arrangement. The sensor detects the dimensions of the item as mentioned above.

According to the invention the axis of rotation is formed as an elongate shaft so that the apparatus may be displaced perpendicularly to the tool plane. Hereby is achieved that items with varying dimension perpendicularly to the plane of the blades, typically in width, may also be machined by the apparatus. The displacement may be controlled by another control means than that used for the pivoting of the apparatus, and which in a preferred embodiment is provided as a second hydraulic cylinder.

In a further preferred embodiment, the second hydraulic cylinder is coupled together with a control unit which detects the dimensions of the items via sensors. The control unit transforms the sensor information to instructions for the control means which corrects the tool position laterally relative to the item.

In the present description, the terms tool plane and shafts perpendicular to the tool plane are used. By the tool plane is to be understood the plane in which e.g. a saw blade forms a saw groove in an item. If it is assumed that the tool shafts are oriented horizontally, the tool plane will thus be a vertical plane.

The invention, however, is not to be understood as being limited horizontally or vertically; but the definition is only to be used for understanding the mutual relation of the planes.

In the following, the invention is described more closely with reference to the accompanying drawing, where:
- Fig. 1: shows an apparatus according to the invention in a side view when machining an item with a certain thickness,
- Fig. 2: shows a view corresponding to Fig. 1 of the apparatus at the machining of a thicker item, and
- Fig. 3: shows the apparatus shown in Figs. 1 and 2 from above.

The subsequent description is not to be regarded as limiting the scope of protection as defined in the claims.

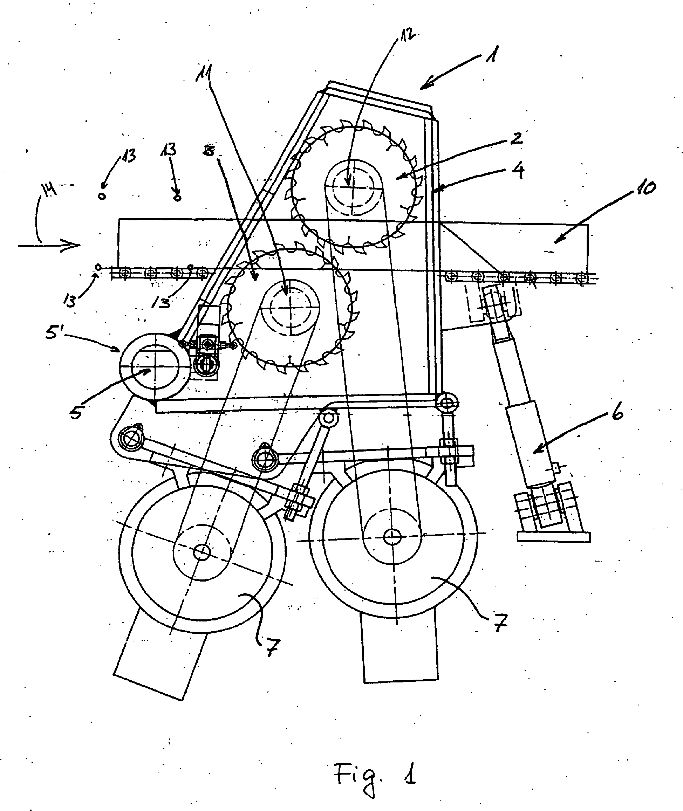

Fig. 1 shows a preferred embodiment of an apparatus 1 according to the invention. The apparatus 1 is comprised of two tools 2,3 in the form of saw blades arranged on a common frame 4. The frame 4 is pivotably mounted about an axis of rotation 5, which is the centre axis of a shaft 5'. Alternatively, pivoting may be established about a shaft 5 provided by means of articulated bearings or other frame supports enabling formation of a common axis of rotation 5 of the tools 2,3 which are to machine an item 10 from opposite sides.

Besides the tools 2,3 and their respective shafts, bearings etc. there are also arranged driving means 7 for the two tools. In the shown example; two separate drive means 7 in the form of electric motors bolted to the underside of the frame 4. The transmission of rotation from the shafts of the electric motors to driving shafts 11, 12 on which the tools are mounted occurs e.g. via V-belts or other kinds of drive belts or chains.

By pivoting the frame 4 and thereby the tools 2,3 up or down about the axis of rotation 5, the vertical distance between the drive shafts of the tools 11,12 is changed. However, the distance cannot be any greater than the tools forming overlapping grooves in the item 10. For example, if saw blades are mounted on the drive shafts, the saw groove from one blade 2 will protrude into the saw groove from the other blade 3. By pivoting the frame 4 about the axis of rotation 5, thicker or thinner items 10 may be machined in the apparatus 1 simultaneously with the optimal working depth being maintained or adjusted so that an overlap between the two saw grooves is formed largely at the centre of the item, irrespectively of the thickness and possible curvature of the item.

For controlling the pivoting of the frame 4, the apparatus 1 is provided with a first hydraulic cylinder 6. The cylinder 6 may be single- or double-acting. By an embodiment with a single-acting cylinder 6, it is arranged for pressing the frame 4 upwards after which the frame 4, due to its dead weight, can press the cylinder together again and thereby move the apparatus 1 downwards. By using a double-acting cylinder 6, the movement of the apparatus upwards and downwards may be activated very quickly. This is advantageous with regard to short reaction time and rapid advancing speed for the items 10 through the apparatus 1.

The cylinder 6 is coupled to a control system with a control unit (not shown) which is connected with sensors 13 disposed before the apparatus 1 as seen in the direction of movement 14 of the items 10, the control unit being adapted for transforming a signal from the sensors 13 to a movement of the cylinder. The sensors 13 are thus used for detecting the dimensions of the items 10 before they are introduced in the apparatus 1. By knowing the dimensions of the item 10, the apparatus can be pivoted to the most optimal position.

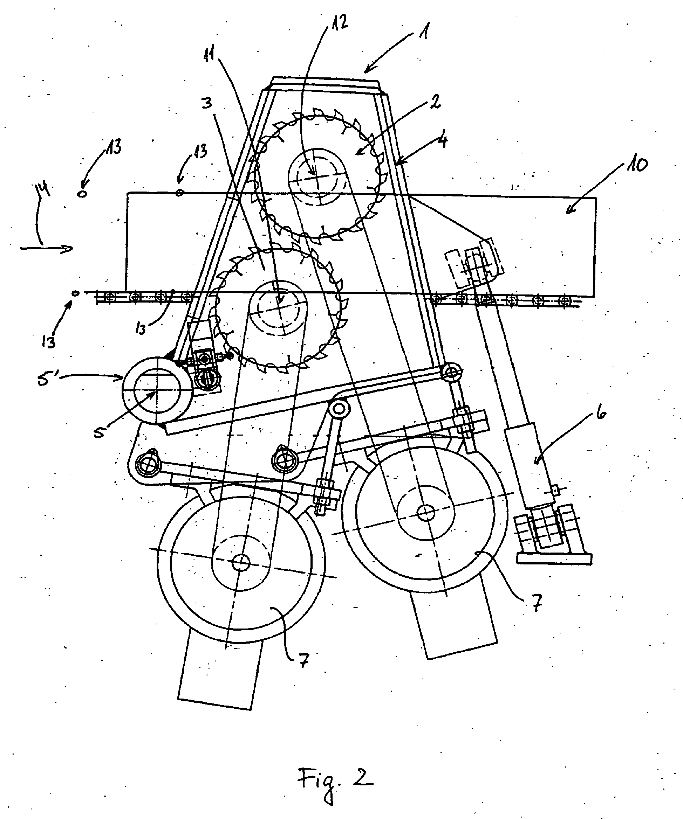

Fig. 2 shows the apparatus shown in Fig. 1 in a situation with an item 10 having greater dimension than the item 10 shown in Fig. 1. Hereby, the apparatus 1 is pivoted to another angular position about the axis of rotation 5 so that a greater distance in vertical direction appears during machining between the drive shafts 11,12 and thereby between the tools 2,3 than shown in Fig. 1. This pivoting is automatically set by the control unit on the basis of the detection of the thickness of the item 10 by the sensors.

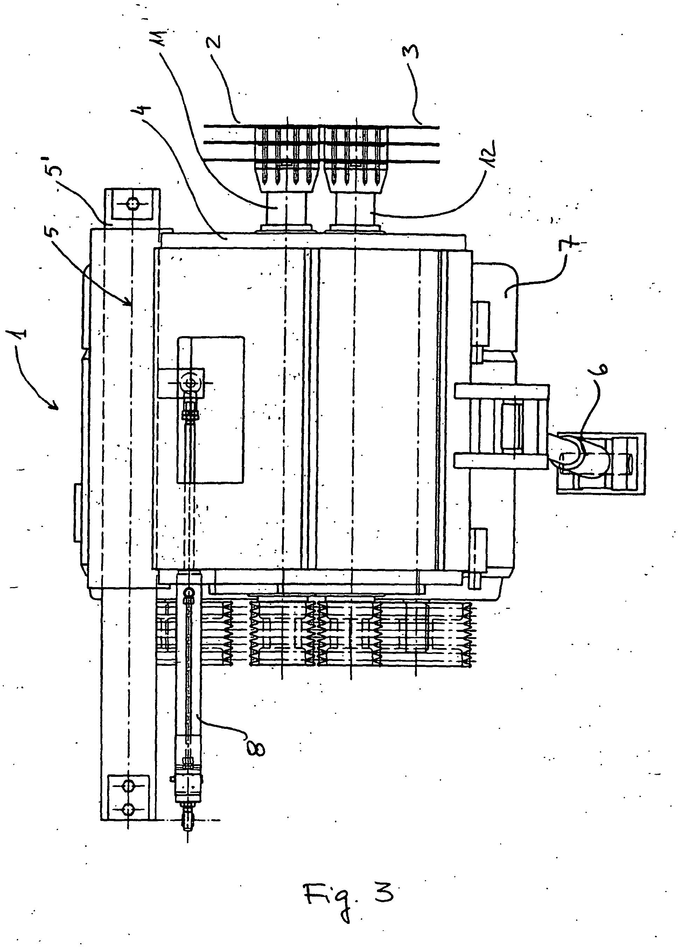

Figs. 3 shows the apparatus 1 as seen from above. The shaft 5' is here clearly illustrated. For displacing the apparatus 1 along the shaft 5' in direction largely perpendicularly to the planes where the tools 2,3 are working, there is arranged a second control means 8. This is here shown as a hydraulic cylinder. By activating the cylinder 8, the apparatus is displaced with the tools arranged thereon along the shaft 5', whereby the tools 2,3 can be set to machine the item (not shown) in a desired cut perpendicularly to the plane of the tools. This will e.g. enable cutting up an item 10 in the shape of a trunk into boards with desired thicknesses. This may occur from both side faces of the trunk when two or more saw blades are placed on each of the drive shafts 11,12, sawing at each side of a vertical centre plane in the longitudinal direction of the trunk. The hydraulic cylinder 8 is typically made as a double-acting hydraulic cylinder.

In an embodiment of the apparatus 1, sensors 13 are arranged in connection with the apparatus 1 so that an item 10, which is brought to machining in the apparatus, is determined geometrically by the sensors 13 with regard to height and width. Thus, there will be used first sensors 13 for determining the height of the item for adjusting the pivoting of the apparatus 1 and second sensors 13 for determining the width of the item for adjusting the apparatus in its lateral position along the shaft 5'.

The informations from the sensors 13 are processed by a control unit which relays instructions to the first and the second control means 6,8, whereby the tools are placed in the most optimal position in relation to the item 10.

## Claims

1. An apparatus for double-sided machining of items (10), wherein the apparatus (1) has at least two rotatable work tools (2,3) mounted on each their drive shaft (11,12), e.g. saw blades, cutter blades or other tools suited for machining operation, and which, via mounting on a common frame (4) are pivotable about a common axis of rotation (5), **characterised in that** the axis of rotation (5) is provided by a shaft (5'), and that the frame (4) with the tools arranged thereon is arranged displacable on the shaft (5') perpendicularly to the plane of the tools (2,3).

2. An apparatus according to claim 1, **characterised in that** the two tools (2,3) are arranged with mutual distance ensuring that the grooves of the tools (2,3) in the items (10) will have an overlap, and that the axis of rotation (5) is arranged so that the tools (2,3) can be pivoted relative to the item (10) in such a way that the overlap is largely kept at the centre of the item (10) to be machined.

3. An apparatus according to claim 1 or 2, **characterised in that** the pivoting movement of the frame (4) is controlled by a control means (6) which is mounted between the frame (4) and a fixed point outside the frame.

4. An apparatus according to claim 3, **characterised in that** the control means (6) is formed as a hydraulic cylinder.

5. An apparatus according to claim 3 or 4, **characterised in that** the control means (6) is coupled to a control unit which is furthermore connected with sensors (13) arranged before the apparatus (1) as seen in the direction of movement (14) relative to the apparatus of the item, whereby the dimensions of the item (10) are detected, and the apparatus (1) is pivoted correspondingly in order to achieve optimal machining.

6. An apparatus according to claim 1, **characterised in that** the displacing of the frame (4) along the shaft (5') is controlled by a second control means (8).

7. An apparatus according to claim 6, **characterised in that** the second control means (8) is connected to sensors (13) arranged in front of the direction of movement (14) relative to the apparatus of the item, whereby the dimensions of the item (10) are detected, and the apparatus (1) is displaced correspondingly along the shaft (5') in order to achieve optimal machining.

8. An apparatus according to any preceding claim, **characterised in that** plural tools are arranged in parallel on each shaft (11,12) and that the tools (2,3) may be of the same or different kinds.

9. An apparatus according to claim 8, **characterised in that** the shafts (11,12) are formed as hollow shafts arranged with several coaxial shaft tubes whereby each tool has a separate drive shaft.

## Patentansprüche

1. Vorrichtung zur beidseitigen Bearbeitung von Gegenständen (10), wobei die Vorrichtung (1) wenigstens zwei rotierbare Bearbeitungswerkzeuge (2, 3) aufweist, die auf ihrer jeweiligen Antriebswelle (11, 12) angebracht sind, z. B. Sägeblätter, Schneidblätter oder andere Werkzeuge, die zur Bearbeitung geeignet sind, und welche, durch Anbringung an einem gemeinsamen Gestell (4) um eine gemeinsame Rotationsachse (5) schwenkbar sind,
**dadurch gekennzeichnet,**
**dass** die Rotationsachse (5) durch eine Welle (5') vorgesehen ist und dass das Gestell (4) mit den auf diesem angeordneten Werkzeugen verschiebbar auf der Welle (5') senkrecht zu der Ebene der Werkzeuge (2, 3) angeordnet ist.

2. Vorrichtung nach Anspruch 1,
**dadurch gekennzeichnet,**
**dass** die zwei Werkzeuge (2, 3) in einem Abstand voneinander angeordnet sind, der sicherstellt, dass die Schnitttiefen der Werkzeuge (2, 3) in den Gegenständen (10) eine Überlappung aufweisen, und dass die Rotationsachse (5) so angeordnet ist, dass die Werkzeuge (2, 3) relativ zu dem Gegenstand (10) derart schwenkbar sind, dass die Überlappung weitgehend in der Mitte des zu bearbeitenden Gegenstandes (10) gehalten ist.

3. Vorrichtung nach Anspruch 1 oder 2,
**dadurch gekennzeichnet,**
**dass** die Schwenkbewegung des Gestells (4) mit einer Steuereinrichtung (6) gesteuert wird, welche zwischen dem Gestell (4) und einem ortsfesten Punkt außerhalb des Gestells angebracht ist.

4. Vorrichtung nach Anspruch 3,
**dadurch gekennzeichnet,**
**dass** die Steuereinrichtung (6) als ein Hydraulikzylinder ausgebildet ist.

5. Vorrichtung nach Anspruch 3 oder 4,
**dadurch gekennzeichnet,**
**dass** die Steuereinrichtung (6) mit einer Bedieneinheit gekoppelt ist, wobei die Steuereinrichtung (6) weiterhin mit Sensoren (13) verbunden ist, welche vor der Vorrichtung (1) in der Bewegungsrichtung (14) des Gegenstandes gesehen relativ zu der Vorrichtung (1) angeordnet sind, verbunden ist, wobei die Abmessungen des Gegenstandes (10) ermittelt werden und die Vorrichtung (1) zum Erreichen einer optimalen Bearbeitung entsprechend geschwenkt wird.

6. Vorrichtung nach Anspruch 1,
**dadurch gekennzeichnet,**
**dass** die Verschiebung des Gestells (4) entlang der Welle (5') durch eine zweite Steuereinrichtung (8) gesteuert ist.

7. Vorrichtung nach Anspruch 6,
**dadurch gekennzeichnet,**
**dass** die zweite Steuereinrichtung (8) mit Sensoren (13) verbunden ist, welche vor der Vorrichtung (1) in der Bewegungsrichtung (14) des Gegenstandes gesehen relativ zur Vorrichtung (1) angeordnet sind, verbunden ist, wobei die Abmessungen des Gegenstandes (10) ermittelt werden und die Vorrichtung (1) entlang der Welle (5') zum Erreichen einer optimalen Bearbeitung entsprechend verschoben wird.

8. Vorrichtung nach einem der vorherigen Ansprüche,
**dadurch gekennzeichnet,**
**dass** mehrere Werkzeuge parallel zueinander auf der jeweiligen Welle (11, 12) angeordnet sind, und dass die Werkzeuge (2, 3) gleichartig oder verschiedenartig sind.

9. Vorrichtung nach Anspruch 8,
**dadurch gekennzeichnet,**
**dass** die Wellen (11, 12) als Hohlwellen mit mehreren koaxialen Rohrwellen ausgebildet sind, wobei jedes Werkzeug eine separate Antriebswelle aufweist.

## Revendications

1. Appareil pour usiner des articles (10) des deux côtés, dans lequel l'appareil (1) a au moins deux outils de travail rotatifs (2, 3) montés chacun sur leur arbre d'entraînement (11, 12), par exemple des lames de scie, des lames de coupe ou d'autres outils appropriés pour une opération d'usinage, et qui, par un montage sur un bâti commun (4), peuvent pivoter autour d'un axe de rotation commun (5),
**caractérisé en ce que** l'axe de rotation (5) est fourni par un arbre (5'), et **en ce que** le bâti (4) avec les outils agencés sur celui-ci est agencé de façon déplaçable sur l'arbre (5') perpendiculairement au plan des outils (2, 3).

2. Appareil selon la revendication 1,
**caractérisé en ce que** les deux outils (2, 3) sont agencés avec une distance mutuelle garantissant que les rainures des outils (2, 3) dans les articles (10) se chevaucheront, et **en ce que** l'axe de rotation (5) est agencé de sorte que les outils (2, 3) peuvent être pivotés par rapport à l'article (10) de telle façon que le chevauchement est en grande part maintenu au niveau du centre de l'article (10) à usiner.

3. Appareil selon la revendication 1 ou 2,
**caractérisé en ce que** le mouvement de pivotement du bâti (4) est commandé par des moyens de commande (6) qui sont montés entre le bâti (4) et un point fixe extérieur au bâti.

4. Appareil selon la revendication 3,
**caractérisé en ce que** les moyens de commande (6) sont réalisés sous la forme d'un vérin hydraulique.

5. Appareil selon la revendication 3 ou 4,
**caractérisé en ce que** les moyens de commande (6) sont couplés à une unité de commande qui est de plus reliée à des capteurs (13) agencés devant l'appareil (1) de la manière vue dans la direction de déplacement (14) par rapport à l'appareil de l'article, grâce à quoi les dimensions de l'article (10) sont détectés, et l'appareil (10) pivote de façon correspondante de façon à obtenir un usinage optimal.

6. Appareil selon la revendication 1,
**caractérisé en ce que** le déplacement du bâti (4) le long de l'arbre (5') est commandé par des seconds moyens de commande (8).

7. Appareil selon la revendication 6,
**caractérisé en ce que** les seconds moyens de commande (8) sont reliés à des capteurs (13) agencés devant la direction de déplacement (14) par rapport à l'appareil de l'article, grâce à quoi les dimensions de l'article (10) sont détectées, et l'appareil (1) est déplacé de façon correspondante le long de l'arbre (5') de façon à obtenir un usinage optimal.

8. Appareil selon une quelconque revendication précédente,
**caractérisé en ce que** plusieurs outils sont agencés en parallèle sur chaque arbre (11, 12) et **en ce que** les outils (2, 3) peuvent être de types identiques ou différents.

9. Appareil selon la revendication 8,
**caractérisé en ce que** les arbres (11, 12) sont réalisés sous la forme d'arbres creux agencés avec plusieurs tubes d'arbre coaxiaux, grâce à quoi chaque outil a un arbre d'entraînement séparé.
